# EUROPEAN PATENT APPLICATION

(11) **EP 2 177 968 A1**
(43) Date of publication of application: **21.04.2010**
(21) Application number: 09160482.7
(22) Date of filing: 18.05.2009
(51) Int. Cl.: G06F 1/16, G06F 3/045

(54) **Touch handheld electronic device**

(30) Priority: 15.10.2008 TW 97139533
(71) Applicant: HTC Corporation, Taoyuan County 330 (TW)
(72) Inventor: Shih, Chin-Chung, Taoyuan County 330 (TW); Yeh, Chih-Shan, Taoyuan County 330 (TW); Wang, Yi-Shen, Taoyuan County 330 (TW)
(74) Representative: Becker Kurig Straus

(57) **Abstract**

A touch handheld electronic device including a housing, a main body, a resistance type touch panel, and a film is provided. The main body is disposed in the housing and has a display module exposed out of the housing. The resistance type touch panel is disposed on the display module, and the film covers the resistance type touch panel and a portion of the housing around the resistance type touch panel.

## Description

### BACKGROUND OF THE INVENTION

### 1. Field of the Invention

The present invention generally relates to a handheld electronic device, in particular, to a touch handheld electronic device.

### 2. Description of Related Art

With increasing progress in the electronic industry, handheld electronic devices, such as mobile phones and personal digital assistants (PDAs), all develop to be more convenient, multi-functional, and aesthetic. The display module is an indispensable component in a handheld electronic device, for making the operation of a user much easier. In order to bring more convenience in operation, achieve a smaller volume, and become more humanized, many handheld electronic devices adopt a touch panel to serve as an input device in addition to the keys.

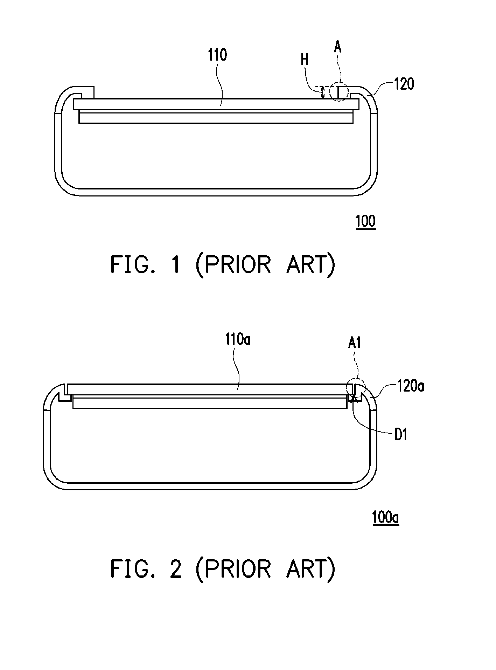

FIG. 1 is a schematic cross-sectional view of a conventional touch handheld electronic device. Referring to FIG. 1, a touch panel 110 and a housing 120 of the touch handheld electronic device 100 have a height difference H at a region A. The height difference H makes it inconvenient for the user to operate at an edge of the touch panel 110, and meanwhile makes the profile of the touch handheld electronic device 100 uneven.

FIG. 2 is a schematic cross-sectional view of another conventional touch handheld electronic device. Referring to FIG. 2, compared with the touch handheld electronic device 100 in FIG. 1, a touch panel 110a and a housing 120a of the touch handheld electronic device 100a have no height difference at a region A1, but are still spaced by a gap D1. Therefore, the touch handheld electronic device 100a cannot be integrated seamless, such that it is inconvenient for the user to operate at the edge of the touch panel 110a. In addition, dusts and cotton flocks that are difficult to be cleared may be easily stuck in the gap D1, and thus affect the overall appearance.

### SUMMARY OF THE INVENTION

Accordingly, the present invention is directed to a touch handheld electronic device with an integrated seamless and complete appearance.

A touch handheld electronic device including a housing, a main body, a resistance type touch panel, and a film is provided. The main body is disposed in the housing and has a display module exposed out of the housing. The resistance type touch panel is disposed on the display module, and the film covers the resistance type touch panel and a portion of the housing around the resistance type touch panel.

The touch handheld electronic device of the present invention has a film covering the touch panel and a portion of the housing around the touch panel, such that the touch handheld electronic device has an integrated seamless and complete appearance. In this manner, not only the appearance of the touch handheld electronic device becomes more aesthetic and achieves a sense of design, the problem in the prior art that it is inconvenient for the user to operate or clean the accumulated dusts and cotton flocks due to the uneven profile of the touch handheld electronic device may also be solved.

In order to make the aforementioned and other objectives, features, and advantages of the present invention comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic cross-sectional view of a conventional touch handheld electronic device.

FIG. 2 is a schematic cross-sectional view of another conventional touch handheld electronic device.

FIG. 3 is a schematic cross-sectional view of a touch handheld electronic device according to an embodiment of the present invention.

FIG. 4 is a schematic top view of the touch handheld electronic device in FIG. 3.

FIG. 5 is a schematic cross-sectional view of a touch handheld electronic device according to another embodiment of the present invention.

FIG. 6 is a schematic cross-sectional view of a touch handheld electronic device according to another embodiment of the present invention.

FIG. 7 is a schematic cross-sectional view of a touch handheld electronic device according to another embodiment of the present invention.

FIG. 8 is a schematic cross-sectional view of a touch handheld electronic device according to still another embodiment of the present invention.

FIG. 9 is a schematic cross-sectional view of a touch handheld electronic device according to yet another embodiment of the present invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

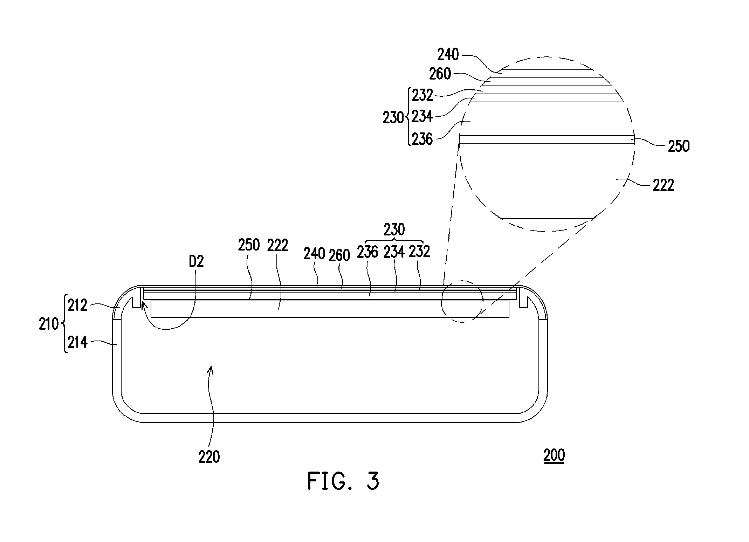

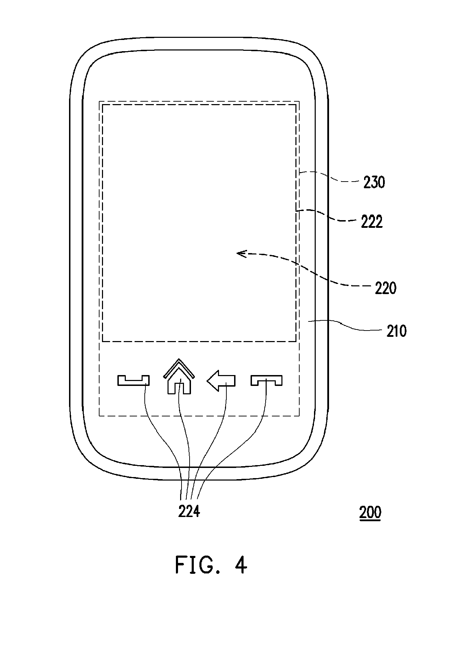

FIG. 3 is a schematic cross-sectional view of a touch handheld electronic device according to an embodiment of the present invention, and FIG. 4 is a schematic top view of the touch handheld electronic device in FIG. 3. Referring to FIG. 3, a touch handheld electronic device 200 of this embodiment is, for example, a mobile phone or a personal digital assistants (PDAs), including a housing 210, a main body 220, a resistance type touch panel 230, and a film 240. The main body 220 is disposed in the housing 210 and has a display module 222 exposed out of the housing 210. The resistance type touch panel 230 is disposed on the display module 222, and the film 240 covers the resistance type touch panel 230 and a portion of the housing 210 around the resistance type touch panel 230. In addition, a gap D2 exists between the resistance type touch panel 230 and the housing 210, and is also covered by the film 240, such that the touch handheld electronic device 200 obtains an integrated seamless and complete appearance.

In this embodiment, the film 240 is elastic, and made of, for example, plastic. The housing 210 includes an upper housing 212 and a lower housing 214. The film 240 and the upper housing 212 can be integrally formed through injection moulding or other methods, and the film 240 covers the entire upper surface of the upper housing 212. The touch handheld electronic device 200 further includes a first adhesive layer 250, disposed between the resistance type touch panel 230 and the display module 222, for fixing the resistance type touch panel 230 to the display module 222 through adhesion. In addition, the touch handheld electronic device 200 further includes a second adhesive layer 260 disposed between the film 240 and the resistance type touch panel 230.

Referring to FIG. 3, the resistance type touch panel 230 of this embodiment includes an upper conductive layer 232, a lower conductive layer 234, and a substrate 236. The upper conductive layer 232 is attached to the film 240, the substrate 236 is adhered to the display module 222 through the first adhesive layer 250, and the lower conductive layer 234 is disposed between the upper conductive layer 232 and the substrate 236. The substrate is made of, for example, glass or transparent plastic. The upper conductive layer 232 and the lower conductive layer 234 are made of, for example, indium tin oxide (ITO) or indium zinc oxide (IZO).

When the user applies a pressure to the upper conductive layer 232 and the lower conductive layer 234 through a finger or a stylus, the pressed position on the upper conductive layer 232 may be deformed, such that the resistance between the upper conductive layer 232 and the lower conductive layer 234 varies. The resistance type touch panel 230 generates a signal through the resistance variation, and the signal is output to the display module 222 after being operated so as to generate an image.

Referring to FIGs. 3 and 4, in this embodiment, the film 240 has a plurality of key patterns 224 located above the resistance type touch panel 230, and the key patterns 224 are away from the display module 222, such that the user may operate the touch handheld electronic device 200 through a touch function at the region of the key patterns 224.

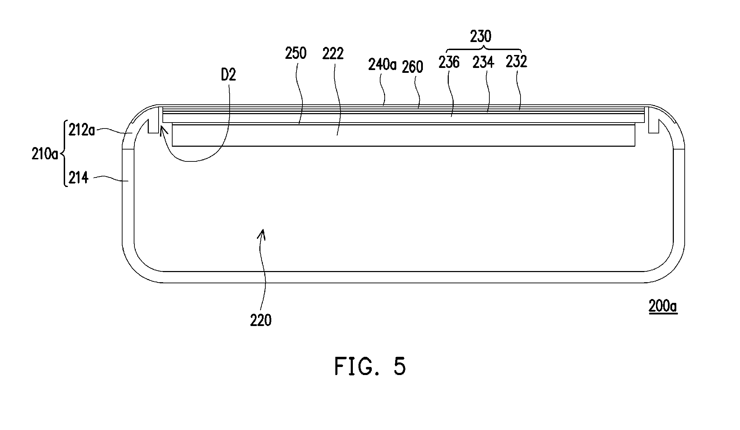

FIG. 5 is a schematic cross-sectional view of a touch handheld electronic device according to another embodiment of the present invention. Referring to FIG. 5, compared with the touch handheld electronic device 200 in FIG. 3, the touch handheld electronic device 200a of the this embodiment has a film 240a only covering a portion of the upper surface of the upper housing 212a.

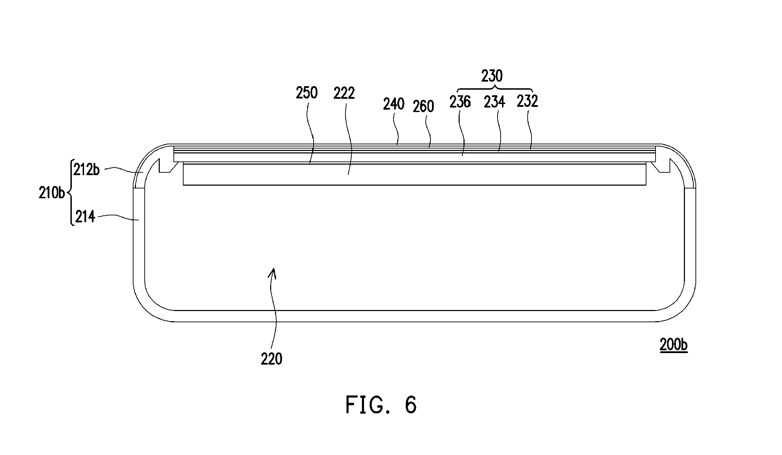

FIG. 6 is a schematic cross-sectional view of a touch handheld electronic device according to another embodiment of the present invention. Referring to FIG. 6, compared with the touch handheld electronic device 200 in FIG. 3, the touch handheld electronic device 200b of the this embodiment has an upper housing 212b integrally formed with the film 240 and the resistance type touch panel 230 through injection moulding or other methods.

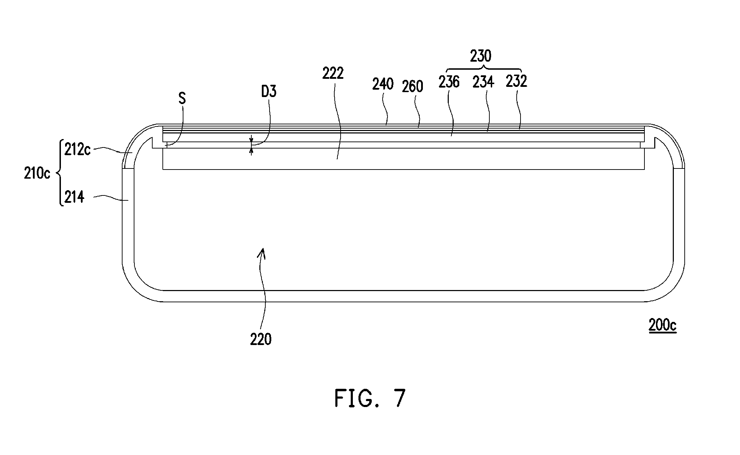

FIG. 7 is a schematic cross-sectional view of a touch handheld electronic device according to another embodiment of the present invention. Referring to FIG. 7, compared with the touch handheld electronic device 200 in FIG. 3, the touch handheld electronic device 200c of the this embodiment does not have the first adhesive layer 250, an upper housing 212c has a support portion S, and the display module 222 is fixed on the support portion 212a. In addition, a gap D3 is maintained between the resistance type touch panel 230 and the display module 222.

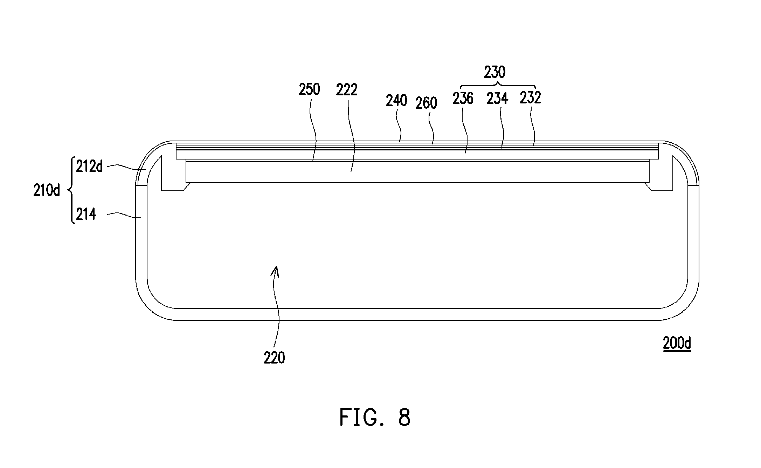

FIG. 8 is a schematic cross-sectional view of a touch handheld electronic device according to still another embodiment of the present invention. Referring to FIG. 8, compared with the touch handheld electronic device 200 in FIG. 3, the touch handheld electronic device 200d of the this embodiment has an upper housing 212c integrally formed with the film 240, the resistance type touch panel 230, and the display module 222 through injection moulding or other methods.

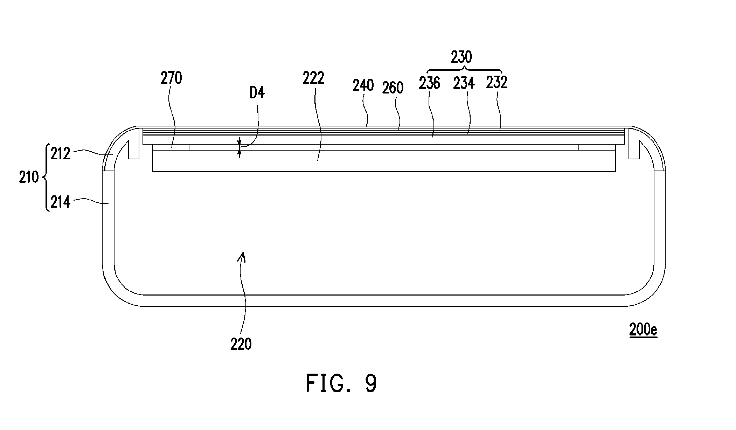

FIG. 9 is a schematic cross-sectional view of a touch handheld electronic device according to yet another embodiment of the present invention. Referring to FIG. 9, compared with the touch handheld electronic device 200 in FIG. 3, the touch handheld electronic device 200e of the this embodiment does not have the first adhesive layer 250, but further includes a buffer material 270 disposed between the resistance type touch panel 230 and the display panel 222, so as to maintain a gap D4 between the display module 222 and the resistance type touch panel 230. The buffer material 270 is a ring disposed in a periphery of the display module 222, and is made of, for example, foam.

To sum up, the touch handheld electronic device of the present invention has a film covering the touch panel and a portion of the housing around the touch panel, and the gap between the touch panel and the housing is also covered by the film, such that the touch handheld electronic device has an integrated seamless and complete appearance. In this manner, the inconvenience for the user to operate at the edge of the touch panel due to the uneven profile of the touch handheld electronic device is avoided. In the touch handheld electronic device with an integrated seamless and complete appearance, dusts and cotton flocks that are difficult to be cleared may not be easily accumulated, so the surface of the device is easy to clean. In addition, for the appearance design, the touch handheld electronic device with an integrated seamless and complete appearance has more design possibilities.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A touch handheld electronic device, comprising:
a housing;
a main body, disposed in the housing, and comprising a display module exposed out of the housing;
a resistance type touch panel, disposed on the display module; and
a film, for covering the resistance type touch panel and a portion of the housing around the resistance type touch panel.

2. The touch handheld electronic device according to claim 1, wherein the film is elastic.

3. The touch handheld electronic device according to claim 1, wherein the film is made of plastic.

4. The touch handheld electronic device according to claim 1, wherein the housing comprises an upper housing and a lower housing, and the film and the upper housing are integrally formed.

5. The touch handheld electronic device according to claim 4, wherein the film covers an entire upper surface of the upper housing.

6. The touch handheld electronic device according to claim 4, wherein the film covers a portion of the upper surface of the upper housing.

7. The touch handheld electronic device according to claim 4, wherein the film, the upper housing, and the resistance type touch panel are integrally formed.

8. The touch handheld electronic device according to claim 7, wherein the upper housing comprises a support portion, the display module is fixed on the support portion, and a gap is maintained between the resistance type touch panel and the display module.

9. The touch handheld electronic device according to claim 4, wherein the film, the upper housing, the resistance type touch panel, and the display module are integrally formed.

10. The touch handheld electronic device according to claim 1, further comprising a first adhesive layer, disposed between the resistance type touch panel and the display module.

11. The touch handheld electronic device according to claim 1, further comprising a second adhesive layer, disposed between the film and the resistance type touch panel.

12. The touch handheld electronic device according to claim 1, further comprising a buffer material, disposed between the resistance type touch panel and the display panel.

13. The touch handheld electronic device according to claim 12, wherein the buffer material is a ring disposed in a periphery of the display module.

14. The touch handheld electronic device according to claim 12, wherein the buffer material is made of foam.

15. The touch handheld electronic device according to claim 1, wherein the film has a plurality of key patterns, located above the resistance type touch panel and away from the display module.

## Amended claims

### Amended claims in accordance with Rule 137(2) EPC.

**1.** A touch handheld electronic device, comprising:
a housing comprising an upper housing and a lower housing;
a main body, disposed in the housing, and comprising a display module exposed out of the housing;
a resistance type touch panel, disposed on the display module; and
a film, for covering the resistance type touch panel and a portion of the housing around the resistance type touch panel, wherein the film and the upper housing are integrally formed.

**2.** The touch handheld electronic device according to claim 1, wherein the film is elastic.

**3.** The touch handheld electronic device according to claim 1, wherein the film is made of plastic.

**4.** The touch handheld electronic device according to claim 1, wherein the film covers an entire upper surface of the upper housing.

**5.** The touch handheld electronic device according to claim 1, wherein the film covers a portion of the upper surface of the upper housing.

**6.** The touch handheld electronic device according to claim 1, wherein the film, the upper housing, and the resistance type touch panel are integrally formed.

**7.** The touch handheld electronic device according to claim 6, wherein the upper housing comprises a support portion, the display module is fixed on the support portion, and a gap is maintained between the resistance type touch panel and the display module.

**8.** The touch handheld electronic device according to claim 1, wherein the film, the upper housing, the resistance type touch panel, and the display module are integrally formed.

**9.** The touch handheld electronic device according to claim 1, further comprising a first adhesive layer, disposed between the resistance type touch panel and the display module.

**10.** The touch handheld electronic device according to claim 1, further comprising a second adhesive layer, disposed between the film and the resistance type touch panel.

**11.** The touch handheld electronic device according to claim 1, further comprising a buffer material, disposed between the resistance type touch panel and the display panel.

**12.** The touch handheld electronic device according to claim 11, wherein the buffer material is a ring disposed in a periphery of the display module.

**13.** The touch handheld electronic device according to claim 11, wherein the buffer material is made of foam.

**14.** The touch handheld electronic device according to claim 1, wherein the film has a plurality of key patterns, located above the resistance type touch panel and away from the display module.
